# EUROPÄISCHE PATENTSCHRIFT

(11) **EP 4 025 344 B1**
(45) Veröffentlichungstag und Bekanntmachung des Hinweises auf die Patenterteilung: **24.07.2024**
(21) Anmeldenummer: 20757895.6
(22) Anmeldetag: 18.08.2020
(51) Int. Cl.: B01L 3/00, F16K 99/00

(54) **MIKROFLUIDISCHE VORRICHTUNG MIT EINER INTEGRIERTEN ZENTRIFUGENEINHEIT ZUR PROZESSIERUNG VON FLÜSSIGEN PROBEN**
MICROFLUIDIC DEVICE WITH AN INTEGRATED CENTRIFUGE UNIT FOR PROCESSING LIQUID SAMPLES
DISPOSITIF MICROFLUIDIQUE AVEC UNE UNITÉ DE CENTRIFUGEUSE INTEGRÉE POUR UN POUR LE TRAITEMENT D'ÉCHANTILLONS LIQUIDES

(30) Priorität: 03.09.2019 DE 102019213313
(43) Veröffentlichungstag der Anmeldung: 13.07.2022
(73) Patentinhaber: Robert Bosch GmbH, 70442 Stuttgart (DE)
(72) Erfinder: MAUCHER, Tanja, 70565 Stuttgart (DE); LAERMER, Franz, 71263 Weil Der Stadt (DE); BOTT, Hannah, 75334 Straubenhardt (DE)
(86) Internationale Anmeldenummer: PCT/EP2020/073042
(87) Internationale Veröffentlichungsnummer: WO 2021/043567

(56) Entgegenhaltungen:
- EP-A1- 2 926 906
- DE-A1- 102010 003 223
- DE-A1- 102015 203 779

## Beschreibung

Die vorliegende Erfindung betrifft eine mikrofluidische Vorrichtung zur Prozessierung von flüssigen Proben, in die eine Zentrifugeneinheit integriert ist, sowie ein Verfahren zum Betreiben einer derartigen mikrofluidischen Vorrichtung und eine Verwendung einer mikrofluidischen Vorrichtung mit integrierter Zentrifugeneinheit.

### Stand der Technik

Es sind mikrofluidische Vorrichtungen bekannt, die als sogenannte Lab-on-a-Chip (LoC)-Systeme die gesamte Funktionalität eines makroskopischen Labors beispielsweise auf einem plastikkartengroßen Substrat unterbringen: Mit solchen Systemen können komplexe biochemische oder mikrobiologische Tests und Untersuchungen in miniaturisierter und automatisierter Weise durchgeführt werden. Beispielsweise bietet die Vivalytic^{®}-Plattform (Robert Bosch GmbH) eine universelle Diagnostikplattform, mit der verschiedene Single- oder Multiplex-Tests in einer Kartusche durchgeführt werden können.

Bei herkömmlichen Prozessierungsprotokollen sind oftmals Zentrifugationsschritte erforderlich, beispielsweise allgemein zur Separation von Zellen oder zur Abtrennung von unerwünschten Blutbestandteilen, wie zum Beispiel Erythrozyten, aus einer Vollblutprobe. In mikrofluidischen Vorrichtungen können als Alternative für einen Zentrifugationsschritt beispielsweise Filter (z. B. Glasfritten) eingesetzt werden. Derartige Filter können jedoch die Funktion einer Zentrifuge nicht in vollem Umfang wiedergeben. Zudem verstopfen derartige Filter sehr leicht und werden dann unbrauchbar. Um solche Probleme zu vermeiden, ist es üblich, erforderliche Zentrifugationsschritte, beispielsweise bei der Verarbeitung einer Vollblutprobe, der automatisierten Prozessierung der Probe in einer mikrofluidischen Vorrichtung vorzuschalten beziehungsweise extern und separat durchzuführen.

Die EP 2 926 906A1 betrifft eine Ventileinrichtung mit wenigstens einem Verschlussmittel und einem Bauteil mit wenigstens einer Kavität. Das Verschlussmittel ist zum Abdichten wenigstens einer Öffnung der Kavität vorgesehen. Die Ventileinrichtung ist durch Zentrifugalkräfte oder gleichwirkende Kräfte betätigbar.

In der DE 10 2015 203 779 A1 wird eine Vorrichtung zur automatisierten Prozessierung von Flüssigkeiten beschrieben. Die Vorrichtung umfasst wenigstens zwei Körper, die innerhalb einer umgebenden Hülsenstruktur axial übereinander angeordnet sind und die in Abhängigkeit von einer Zentrifugalkraft oder einer gleichwirkenden Kraft gegeneinander verdrehbar sind. In den Körpern sind wenigstens ein Probenaufgabegefäß und wenigstens ein Auffanggefäß für eine prozessierte Flüssigkeit vorgesehen.

Aus der DE 10 2010 003 223A1 ist eine Vorrichtung zum Einsetzen in einen Rotor einer Zentrifuge bekannt. Diese weist in einem Gehäuse zwei übereinander gestapelte Körper auf. Bei einer Rotation des Rotors, ist ein Abstand eines der beiden Körper zu einer Rotationsachse des Rotors geringer als ein Abstand des anderen Körpers zu der Rotationsachse. Der erste Körper weist zwei Kavitäten auf und der zweite Körper weist eine Kavität auf. Die beiden Körper sind in dem Gehäuse beweglich zueinander angeordnet, um ansprechend auf eine Rotation des Rotors, in einer ersten Phase die erste Kavität des ersten Körpers mit der Kavität des zweiten Körpers fluidisch zu koppeln und, in einer zweiten Phase, die zweite Kavität des ersten Körpers mit der Kavität des zweiten Körpers fluidisch zu koppeln.

### Offenbarung der Erfindung

### Vorteile der Erfindung

Die Erfindung stellt eine mikrofluidische Vorrichtung zur Prozessierung von flüssigen Proben mit einer Zentrifugeneinheit bereit, wobei die Zentrifugeneinheit durch ein Zentrifugentöpfchen und wenigstens eine zentripetalkraftabhängige Ventilfunktion gekennzeichnet ist. Der Kern der Erfindung liegt damit in einer Integration einer Mini-Zentrifuge in eine mikrofluidische Vorrichtung, insbesondere in eine Lab-on-a-Chip-Vorrichtung. Die Integration der Zentrifugeneinheit in die mikrofluidische Vorrichtung erlaubt in besonders vorteilhafter Weise einen Workflow bei der Prozessierung der flüssigen Proben, der einen vollwertigen Zentrifugationsschritt oder gegebenenfalls mehrere Zentrifugationsschritte umfasst. Damit können in vollautomatisierbarer Weise beispielsweise Vollblutproben verarbeitet werden, so dass beispielsweise alles zelluläre Material (Blutzellen) aus Vollblut abgetrennt und das zellfreie Blutplasma extrahiert werden kann. Es können beispielsweise auch bestimmte Blutzellen, beispielsweise Erythrozyten, mittels der Zentrifugeneinheit innerhalb der mikrofluidischen Vorrichtung durch selektive Lyse und Abzentrifugation abgetrennt und verworfen und die verbleibenden Zellen, z. B. Erythrozyten, z. B. zur Extraktion von Nukleinsäuren lysiert und in das Kanalsystem der mikrofluidischen Vorrichtung eingekoppelt und weiterverarbeitet werden. Insgesamt erleichtert die in die mikrofluidische Vorrichtung integrierbare Zentrifugeneinheit die Prozessierung von flüssigen Proben erheblich, da vorgeschaltete, extern durchzuführende Zentrifugationsschritte entfallen können und die Zentrifugationsschritte in die automatisierbare Prozessierung der Probe innerhalb der mikrofluidischen Vorrichtung integriert werden können.

Die Zentrifugeneinheit ist insbesondere für eine Integration in eine Probeneingabekammer der mikrofluidischen Vorrichtung vorgesehen. Prinzipiell können die Zentrifugeneinheit oder gegebenenfalls mehrere Zentrifugeneinheiten auch an anderen Positionen innerhalb einer mikrofluidischen Vorrichtung integriert sein. Das Zentrifugentöpfchen ist insbesondere mittels einer Spindel, beispielsweise einer Spindel aus Metall (Metallnadel) oder aus Kunststoff, zwischen zwei Schichten der Vorrichtung drehbar gelagert. Im Allgemeinen sind gattungsgemäße mikrofluidische Vorrichtungen aus zwei oder mehr Kunststoffschichten aufgebaut, beispielsweise aus Polycarbonat, so dass die Integration der Zentrifugeneinheit ohne besonderen Aufwand möglich ist. In der Regel ist eine einfache Vertiefung innerhalb der Schichten oder ein Kunststofflager für die Aufnahme der Spindel ausreichend stabil, da im Allgemeinen die Betriebsdauern der Zentrifugeneinheit in der Vorrichtung vergleichsweise kurz sind.

Das mikrofluidische Netzwerk einer mikrofluidischen Vorrichtung wird im Allgemeinen durch Kanalstrukturen innerhalb der Schichten realisiert, die beispielsweise durch Oberflächenstrukturierungen oder durch Aufschweißen von strukturgebenden Elementen erreicht werden. Weiterhin sind im Allgemeinen abdeckende und abdichtende Schichten sowie gegebenenfalls elastische und/oder pneumatische Schichten vorgesehen. Derartige mikrofluidische Vorrichtungen können beispielsweise in Form einer Kartusche hergestellt werden und für den einmaligen oder mehrmaligen Gebrauch vorgesehen sein. Die Integration einer Zentrifugeneinheit gemäß der Erfindung erfolgt zweckmäßigerweise bereits während des Zusammenbaus einer mikrofluidischen Vorrichtung, wobei die Zentrifugeneinheit manuell oder beispielsweise mittels eines Industrieroboters an die vorgesehene Position montiert und gegebenenfalls justiert wird, bevor eine finale Verschweißung der Schichten erfolgt.

Für die Drehung beziehungsweise Rotation des Zentrifugentöpfchens können insbesondere ein mechanischer Antrieb und/oder ein magnetischer Antrieb und/oder ein pneumatischer Antrieb vorgesehen sein. Beispielsweise kann der Antrieb über einen direkten mechanischen Eingriff eines Antriebsmotors in die mikrofluidische Vorrichtung vorgesehen sein, wobei hierfür ein geeignet gestalteter mechanischer "Mitnehmer" oder beispielsweise eine magnetische Kupplung, zum Beispiel über Kleinmagnete, zwischen dem Zentrifugentöpfchen und einem externen Motor vorgesehen sein kann. Beispielsweise kann der Antrieb auch mithilfe eines magnetischen Drehfeldes eines Antriebsmotors erfolgen, das von außen auf beispielsweise einen kleinen Magneten innerhalb des Zentrifugentöpfchens wirkt und diesen wie einen synchronen Motor bewegt. Darüber hinaus ist beispielsweise ein pneumatischer Antrieb möglich, indem Druckluft auf beispielsweise Turbinenschaufeln am oder unter dem Zentrifugentöpfchen wirkt. Oftmals ist bereits für den sonstigen Betrieb einer mikrofluidischen Vorrichtung Druckluft vorgesehen, insbesondere für die Betätigung von pneumatischen Ventilen und Pumpenmembranen, zum Beispiel mit einem Pneumatikdruck von 1,5 bar. Dieser Druck kann auch für den Antrieb beziehungsweise die Rotation des Zentrifugentöpfchens benutzt werden. Über Turbinenschaufeln kann die Geschwindigkeit der Luftströmung aus der Pneumatik direkt in eine Drehbewegung des Zentrifugentöpfchens umgewandelt werden.

Bei der zentripetalkraftabhängigen Ventilfunktion der Zentrifugeneinheit handelt es sich insbesondere um eine reversible Ventilfunktion, so dass in Abhängigkeit von der wirkenden Zentripetalkraft das Ventil geöffnet oder geschlossen werden kann. Die Ventilfunktion lässt sich damit über die Rotationsgeschwindigkeit der Zentrifugeneinheit steuern beziehungsweise betätigen.

Die zentripetalkraftabhängige Ventilfunktion kann beispielsweise durch einen Dichtring realisiert sein. Beispielsweise kann der Dichtring im oberen Bereich des Zentrifugentöpfchens innen angeordnet sein. Zur Abtrennung von zellulärem Material aus einer Probe kann die Zentrifugeneinheit mit der darin befindlichen Probenflüssigkeit beispielsweise zunächst mit einer ersten Drehzahl im mittleren Drehzahlbereich rotiert. Durch die wirkenden Zentripetalkräfte liegt dabei die Probenflüssigkeit an der Wand des Zentrifugentöpfchens wie eine homogene Säule an. Da Flüssigkeiten inkompressibel sind, bewirkt die Zentripetalkraft auf die Masse der rotierenden Flüssigkeit einen Druck, der überall in der Flüssigkeit vorherrscht, und somit auch an der Dichtfläche des Dichtrings (O-Ring) zur Zentrifugentöpfchenwand. Bis zu einem gewissen Schwellwert der wirkenden Zentripetalkräfte hält diese Dichtfläche dem anliegenden Druck stand, so dass über einen gewissen Zeitraum bei der entsprechenden Drehzahl zentrifugiert werden kann, bis sich alle zellulären Bestandteile an der Zentrifugentöpfchenwand abgesetzt haben. Ist dieser Zustand erreicht, wird die Drehzahl des Zentrifugentöpfchens erhöht, so dass der Schwellwert der Dichtring-Dichtwirkung an der Dichtfläche überschritten wird und die von zellulären Bestandteilen befreite Flüssigkeit (zum Beispiel Blutplasma nach Zentrifugation einer Vollblutprobe) durch die Dichtfläche zwischen Dichtring und Töpfcheninnenwand gepresst wird und das Zentrifugentöpfchen verlässt. Die Flüssigkeit kann dann in entsprechende Kanäle der mikrofluidischen Vorrichtung eingekoppelt werden.

In einer anderen, besonders bevorzugten Ausführungsform der zentripetalkraftabhängigen Ventilfunktion sind in dem Zentrifugentöpfchen Öffnungen vorgesehen, die über einen das Zentrifugentöpfchen außen umgebenden Dichtring in Abhängigkeit von der wirkenden Zentripetalkraft reversibel verschlossen beziehungsweise freigegeben werden. Zweckmäßigerweise weist in dieser Ausgestaltung das Zentrifugentöpfchen im oberen Bereich eine nach innen ragende Krempe auf, die ein Entweichen der Flüssigkeit oben aus dem Zentrifugentöpfchen heraus bei einer Rotation des Zentrifugentöpfchens vermeidet. Bei zunehmenden Zentripetalkräften wird der Dichtring von der Dichtfläche weggedehnt, so dass die Dichtkraft an der Außenfläche des Zentrifugentöpfchens reduziert wird. Vorteilhaft in diesem Zusammenhang ist ein relativ weiches Material für den Dichtring, das sich durch Einwirkung der Zentripetalkraft leicht dehnen lässt. Alternativ können beispielsweise nach außen sich öffnende, gefederte Ventilklappen oder -kugeln (Klappenventile oder Kugelventile) eingesetzt werden, die von der wirkenden Zentripetalkraft ab einer bestimmten Drehzahl des Zentrifugentöpfchens geöffnet werden.

In einer weiteren, besonders bevorzugten Ausgestaltung wird die Ventilfunktion durch wenigstens eine Öffnung in der Wand des Zentrifugentöpfchens gebildet, in der ein die Zentrifugentöpfchenwand durchtretender Bolzen beweglich angeordnet ist. Außerhalb des Zentrifugentöpfchens ist der Bolzen mit einem Bolzenkopf und einem unterhalb des Bolzenkopfes angeordneten Dichtring ausgestattet, so dass hierdurch die Öffnung bei fehlender oder gegebenenfalls geringer Zentripetalkraft verschlossen ist. Innerhalb des Zentrifugentöpfchens wird der Bolzen durch eine gesicherte Druckfeder (Rückstellfeder) in einer dichtenden Stellung gehalten. Die Federkraft ist so eingestellt, dass die dichtende Stellung unterhalb einer vorgebbaren Zentripetalkraft gegeben ist. Sobald die Zentripetalkraft einen bestimmten Schwellenwert übersteigt, entfernt sich der Bolzenkopf von der Öffnung in der Zentrifugentöpfchenwand, so dass die dichtende Stellung aufgegeben wird und Flüssigkeit aus den Zentrifugentöpfchen heraustreten kann.

Die Sicherung der Druckfeder kann beispielsweise durch eine Gegenmutter realisiert sein, die auf einem Gewinde des Bolzens (Schraubengewinde) im Inneren des Zentrifugentöpfchens aufgesetzt ist. Der Schwellwert für die Drehzahl beziehungsweise für die Zentripetalkraft, ab der eine Öffnung des oder der Ventile stattfindet, wird insbesondere durch die Masse des Bolzens und gegebenenfalls der Gegenmutter bestimmt. Weiterhin wird der Schwellwert durch die Federkraft der Druckfeder und durch die Position der Gegenmutter auf dem Gewinde des Bolzens, die die Vorspannung der Druckfeder beziehungsweise der Rückstellfeder beeinflusst, bestimmt. Insofern kann mittels der Position der Gegenmutter die Rückhaltekraft der Feder eingestellt werden. Durch Auswahl entsprechender Bolzen (oder Schrauben) und Gegenmuttern beziehungsweise deren Massen sowie mehr oder weniger steifen Federn und entsprechender Einstellung (Positionierung) der Gegenmutter auf dem Gewinde kann eine präzise Einstellung der Ventilfunktion in Abhängigkeit von der wirkenden Zentripetalkraft erreicht werden. Wenn beispielsweise mehrere derartige Ventile bei einem Zentrifugentöpfchen vorgesehen sind, beispielsweise drei Ventile, kann präzise eingestellt werden, dass alle Ventile bei exakt derselben gewünschten Drehzahl öffnen und wieder schließen. Als Komponenten für die Ventilkonstruktion eignen sich insbesondere biokompatible Materialien, zum Beispiel rostfreier Stahl oder Edelstahl, Kunststoffe oder Titan.

Bei einer Rotation unterhalb der Schwellwertdrehzahl erfolgt eine Zentrifugation des Probenmaterials innerhalb des Zentrifugentöpfchens. Bei einem Überschreiten der Schwellwertdrehzahl wird die Ventilfunktion ausgelöst und es kann ein wohldefinierter und schneller Übertritt der zentrifugierten Flüssigkeit in das mikrofluidische Netzwerk der Vorrichtung gesteuert stattfinden.

Aus der jeweiligen Art der Ausgestaltung der Ventilfunktion ergibt sich die Schwellwertgröße der Zentripetalkraft, bei der die Ventilfunktion ausgelöst wird beziehungsweise bei deren Überschreiten sich das Ventil öffnet und bei deren Unterschreiten sich das Ventil bei einer reversiblen Ventilfunktion wieder schließt. Hierbei ergibt sich die Zentripetalkraft aus der Zentripetalbeschleunigung und der Masse. Beispielsweise kann die Ventilfunktion so ausgestaltet sein, dass sich das Ventil bei einer Zentripetalbeschleunigung von circa 400 - 500 g öffnet. Dies würde bei einem Innendurchmesser des Zentrifugentöpfchens von beispielsweise 8 mm und einem Flüssigkeitsfilm in dem Zentrifugentöpfchen von circa 1 mm Dicke circa 10.000 U/min entsprechen. Die Ventilfunktion kann auch so ausgestaltet sein, dass höhere Zentripetalbeschleunigungen für das Öffnen des Ventils erforderlich sind, beispielsweise circa 3.500 - 4.000 g (entspricht bei dem oben erwähnten Innendurchmesser circa 30.000 U/min) oder circa 4.500 - 5.000 g (entspricht bei dem oben erwähnten Innendurchmesser circa 35.000 U/min).

In einer weiteren Ausgestaltung der Zentrifugeneinheit ist die Ventilfunktion eine irreversible Ventilfunktion, wobei vorzugsweise die irreversible Ventilfunktion zusätzlich zu einer reversiblen Ventilfunktion vorgesehen ist. Die irreversible Ventilfunktion kann beispielsweise durch eine Folie und/oder einen Stöpsel oder Ähnliches, die eine oder mehrere Öffnungen in der Wand des Zentrifugentöpchens verschließen, realisiert sein. Ab einer bestimmten Zentripetalkraft öffnet sich die Folie oder löst sich der Stöpsel, so dass die Öffnung für einen Flüssigkeitsdurchtritt freigegeben wird. Diese irreversible Ventilfunktion ist insbesondere für eine vollständige und möglichst verlustfreie Flüssigkeitsübertragung vorteilhaft, so dass das Zentrifugentöpfchen beispielsweise vollständig und schnell entleert werden kann. Wenn sowohl eine reversible als auch eine irreversible Ventilfunktion vorgesehen ist, wird die irreversible Ventilfunktion vorzugsweise bei einer höheren Zentripetalkraft ausgelöst als die reversible Ventilfunktion. So kann beispielsweise die reversible Ventilfunktion für eine wiederholte Spülung des Zentrifugentöpfchens vorgesehen sein (z. B. bei einer Schwellwertdrehzahl von 10.000 U/min) und die irreversible Ventilfunktion bei einer sehr hohen Drehzahl, beispielsweise bei 30.000 oder 35.000 U/min zur abschließenden vollständigen Entleerung des Zentrifugentöpfchens genutzt werden.

In einer weiteren bevorzugten Ausgestaltung der Zentrifugeneinheit ist die innere Oberfläche des Zentrifugentöpfchens zumindest teilweise mit Oberflächenstrukturen zur Anhaftung von Probenbestandteilen ausgestattet. Durch derartige Rauigkeiten oder Nanostrukturen oder beispielsweise gezielt angebrachte Vertiefungen in der Innenwand des Zentrifugentöpfchens kann eine zusätzliche Adhäsion von beispielsweise Zellen oder Bestandteilen der Probe an der inneren Oberfläche des Zentrifugentöpfchens weiter unterstützt werden, so dass die Trennschärfe des Zentrifugationsschrittes weiter verbessert werden kann.

Das Zentrifugentöpfchen ist vorzugsweise zusammen mit der mikrofluidischen Vorrichtung bzw. der Lab-on-Chip-Kartusche während der Prozessierung vorzugsweise mit einem bestimmten Kippwinkel ausgerichtet, beispielsweise bei einem Kippwinkel zwischen 10 und 50°, vorzugsweise etwa 30°. Ein solcher Kippwinkel erleichtert den Flüssigkeitsübertritt aus dem Zentrifugentöpfchen heraus in das fluidische Netzwerk der Lab-on-Chip-Kartusche. Hierfür kann entweder das Zentrifugentöpfchen selbst in Relation zu der mikrofluidischen Vorrichtung mit dem Kippwinkel angeordnet sein. In anderen, besonders bevorzugten Ausführungsformen wird die mikrofludische Vorrichtung selbst innerhalb eines Prozessierungsgeräts mit einem entsprechenden Kippwinkel ausgerichtet. Dies hat den Vorteil, dass auch der weitere Flüssigkeitstransport innerhalb der mikrofluidischen Vorrichtung durch die wirkende Schwerkraft unterstützt werden kann.

Wenn die Zentrifugeneinheit in eine Probeneingabekammer der Vorrichtung integriert ist, kann der Zentrifugationsschritt als erster Schritt bei der Prozessierung der Probe durchgeführt werden. Je nach gewünschtem Ablauf der durchzuführenden Prozessierung ist es aber durchaus auch möglich, die Zentrifugeneinheit alternativ oder zusätzlich an anderer Stelle in der Vorrichtung zu integrieren. Die Integration der Zentrifugeneinheit in die Vorrichtung und die weitere Ausgestaltung des fluidischen Netzwerks der Vorrichtung ist dabei so ausgestaltet, dass das Zentrifugat aus dem Zentrifugentöpfchen in das fluidische Netzwerk der Vorrichtung in der gewünschten und erforderlichen Weise einkoppelbar ist. Weiterhin ist es vorzugsweise vorgesehen, dass die Integrationsposition der Zentrifugeneinheit, also beispielsweise die Probeneingabekammer, einen fluidischen Zugang aufweist, über den Flüssigkeiten unabhängig von der Zentrifugeneinheit, also ohne das Zentrifugentöpfchen zu durchlaufen, in die Vorrichtung eingebracht werden können. So kann beispielsweise ein Spülprozess der Zentrifugeneinheit vorgenommen werden. Weiterhin ist es vorzugsweise vorgesehen, dass die Zentrifugeneinheit z.B. nach einer Zentrifugation mit einer weiteren Flüssigkeit überspült und somit das Zentrifugentöpfchen erneut gefüllt werden kann, um z.B. mehrere Spülschritte der Zentrifugeneinheit selbst vornehmen zu können.

In Anpassung an die Dimensionen der mikrofluidischen Vorrichtung ist auch die Zentrifugeneinheit entsprechend dimensioniert. Für kommerziell gebräuchliche mikrofluidische Vorrichtungen können beispielsweise Zentrifugeneinheiten zum Einsatz kommen, deren Zentrifugentöpfchen einen Durchmesser und/oder eine Höhe von etwa 5 bis 20 mm, vorzugsweise etwa 5 bis 15 mm, beispielsweise etwa 10 mm Außendurchmesser und etwa 8 mm Innendurchmesser aufweist. Je nach der Art und der Dimensionierung der mikrofluidischen Vorrichtung selbst und dem Anwendungsfalls sind Anpassungen der Dimensionen der Zentrifugeneinheit möglich.

Die Erfindung umfasst weiterhin ein Verfahren zum Betreiben der beschriebenen Zentrifugeneinheiten innerhalb einer mikrofluidischen Vorrichtung, wobei nach einem Einbringen der Probe in das Zentrifugentöpfchen der Zentrifugeneinheit in einer ersten Phase das Zentrifugentöpfchen mit einer ersten Drehzahl rotiert wird. In einer anschließenden zweiten Phase wird das Zentrifugentöpfchen mit einer zweiten, erhöhten Drehzahl rotiert, wobei durch die erhöhte Drehzahl die wenigstens eine zentripetalkraftabhängige Ventilfunktion der Zentrifugeneinheit betätigt wird. Diese Phasen können wiederholt werden, um beispielsweise Spülprozesse vorzunehmen. Weiterhin kann es vorgesehen sein, dass weitere Ventilfunktionen in der Zentrifugeneinheit vorgesehen sind, die beispielsweise bei einer weiter erhöhten Drehzahl auslösbar sind. Beispielsweise kann sich bei dem Verfahren eine dritte Phase anschließen, in der mit einer dritten, weiter erhöhten Drehzahl rotiert wird, die zur Auslösung beispielsweise einer irreversiblen Ventilfunktion führt, mit der das Zentrifugentöpfchen schnell und vollständig entleert werden kann.

Bei dem Verfahren ist es vorzugsweise vorgesehen, dass das Zentrifugentöpfchen ein- oder mehrfach mit neuer Flüssigkeit überspült wird. Durch das erneute, gezielte Einbringen von Flüssigkeit(en) können verschiedene Prozesse in dem Zentrifugentöpfchen in automatisierbarer Weise vorgenommen werden. Beispielsweise können ein- oder mehrfache Spülprozesse erfolgen. Weiterhin ist es möglich, durch entsprechende Wahl des einzubringenden Mediums beziehungsweise der Flüssigkeit beispielsweise Lyseprozesse oder anderes in dem Zentrifugentöpfchen auszulösen, um beispielsweise Zellen aufzuschließen und/oder bestimmte enzymatische Prozesse auszulösen. Anschließend können die Bestandteile der Probe innerhalb des Zentrifugentöpfchens durch Zentrifugation aufgetrennt und der Überstand in durch die Drehzahl kontrollierter Weise aus dem Zentrifugentöpfchen entfernt und entweder verworfen oder zur weiteren Verarbeitung in das Kanalsystem der Vorrichtung eingekoppelt werden.

Die Erfindung umfasst schließlich die Verwendung der beschriebenen mikrofluidischen Vorrichtung, in die wenigstens eine Zentrifugeneinheit gemäß der obigen Beschreibung integriert ist, wobei die Vorrichtung zur Abtrennung von zellulären Bestandteilen einer Probe und/oder zur Lyse von zellulären Bestandteilen und/oder zur selektiven Isolierung bestimmter zellulärer Bestandteile und/oder von deren Lysaten eingesetzt wird. Beispielsweise kann mithilfe der beschriebenen Vorrichtung zelluläres Material aus einer Vollblutprobe abgetrennt werden und das zellfreie Blutplasma gewonnen und weiterverwendet werden. Weiterhin kann die Vorrichtung genutzt werden, um beispielsweise Erythrozyten aus einer Vollblutprobe abzutrennen, um anschließend die verbleibenden Zellen, beispielsweise Leukozyten, zu isolieren und gegebenenfalls weiter zu verarbeiten. Beispielsweise können die Leukozyten anschließend lysiert und deren Nukleinsäuren extrahiert werden.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigen:
- Figur 1: schematische Schnittdarstellung durch einen Teil einer mikrofluidischen Vorrichtung mit integrierter Zentrifugeneinheit gemäß einer ersten Ausführungsform;
- Figur 2: schematische Schnittdarstellung der Ausführungsform aus Fig. 1 zur Illustrierung eines Spülvorgangs;
- Figur 3: schematische Schnittdarstellung einer weiteren Ausführungsform einer Zentrifugeneinheit;
- Figur 4: schematische Aufsicht auf eine Zentrifugeneinheit in einer weiteren bevorzugten Ausführungsform und
- Figur 5: schematische Schnittdarstellung einer weiteren bevorzugten Ausführungsform einer Zentrifugeneinheit mit reversiblen und irreversiblen Ventilfunktionen.

### Beschreibung von Ausführungsbeispielen

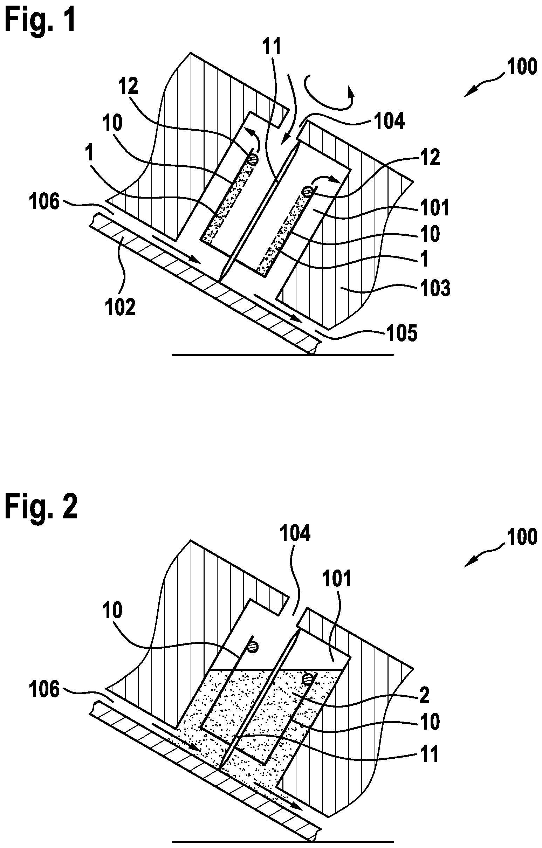

**Fig. 1** zeigt in schematischer Weise die Integration der Zentrifugeneinheit mit dem Zentrifugentöpfchen 10 innerhalb einer Probeneingabekammer 101 einer mikrofluidischen Vorrichtung 100. Das Zentrifugentöpfchen 10 ist mittels einer Spindel 11, die vorzugsweise metallisch oder auch beispielsweise aus Kunststoff gefertigt sein kann, zwischen einer unteren Dichtschicht 102 und einer strukturgebenden fluidischen Schicht 103 der Vorrichtung drehbar gelagert. Die Dichtschicht 102 und die fluidische Schicht 103 sind beispielsweise aus Polycarbonat gefertigt. Die Spindel 11 wird in entsprechende Vertiefungen oder Gegenlager der Schichten 102 und 103 eingesetzt. In dieser Ausführungsform wird das Zentrifugentöpfchen 10 im oberen Bereich innen von einem Dichtring (O-Ring) 12 abgeschlossen. Dieser Dichtring 12 realisiert eine zentripetalkraftabhängige Ventilfunktion. Die Flüssigkeit 1 innerhalb des Zentrifugentöpfchens 10 wird zusammen mit dem Zentrifugentöpfchen 10 rotiert. Die Flüssigkeit 1 kann zum Beispiel eine Blutprobe sein, die zuvor über die Probeneinlassöffnung 104 in Pfeilrichtung direkt in das Zentrifugentöpfchen 10 eingegeben worden ist. Der eigentliche Antrieb für die Rotation des Zentrifugentöpfchens 10 kann auf verschiedene Weise erfolgen, beispielsweise durch einen direkten mechanischen Eingriff eines Antriebsmotors über mechanische "Mitnehmer" oder über eine magnetische Kopplung oder ein magnetisches Drehfeld oder auf pneumatische Weise.

Während des Betriebs ist das Zentrifugentöpfchen 10 vorzugsweise mit einem bestimmten Kippwinkel angeordnet, vorzugsweise mit einem Kippwinkel von etwa 30°. Dieser Kippwinkel kann beispielsweise dadurch realisiert werden, dass die gesamte mikrofluidische Vorrichtung 100 in einem Prozessierungsgerät in einem entsprechenden Winkel positioniert ist. Die Rotation des Zentrifugentöpfchens 10 bewirkt Zentripetalkräfte, so dass die Probenflüssigkeit 1 an der Wand des Zentrifugentöpfchens 10 mit einem gewissen Druck anliegt. Bis zu einem gewissen Schwellwert hält die Dichtfläche zwischen dem Dichtring 12 und der Wand des Zentrifugentöpfchens 10 dem anliegenden Druck stand, so dass über eine gewisse Zeit mit der entsprechenden Drehzahl zentrifugiert werden kann, bis sich beispielsweise alle zellulären Bestandteile an der Wand des Zentrifugentöpfchens 10 abgesetzt haben. Ist dieser Zustand erreicht, wird die Drehzahl des Zentrifugentöpfchens 10 erhöht, so dass der Schwelldruck an der Dichtfläche überschritten wird und die von zellulären Bestandteilen befreite Flüssigkeit (zum Beispiel das Plasma nach Zentrifugation einer Vollblutprobe) durch die Dichtfläche zwischen Dichtring 12 und Innenwand des Zentrifugentöpfchens 10 gepresst wird. Das Zentrifugat, also beispielsweise das Plasma, wird dabei in die Probeneingabekammer 101 geschleudert und kann dann über einen Probekammerauslass 105 in das fluidische Netzwerk der mikrofluidischen Vorrichtung 100 eingekoppelt werden. Gegebenenfalls kann eine Sammlung der Flüssigkeit vor dem Ausgang 105 vorgesehen sein.

Unterhalb des Zentrifugentöpfchens 10 mündet in die Probeneingabekammer 101 ein weiterer fluidische Zugang 106, mit dem beispielsweise der Bereich, in den das Zentrifugat ausgeschleudert und/oder der Probenkammerauslass 105 und/oder das Zentrifugentöpfchen 10 selbst mit geeignetem Medium gespült und/oder gereinigt werden, wie es in der **Fig. 2** illustriert ist. Über den fluidischen Zugang 106 wird dabei eine weitere Flüssigkeit 2 in die Probeneingabekammer 101 von unten eingebracht. Der Flüssigkeitsstand der Flüssigkeit 2 kann dabei in der Probeneingabekammer 101 die tieferliegende Kante des Zentrifugentöpfchens 10 übersteigen, so dass die Flüssigkeit 2 in das Zentrifugentöpfchen 10 eindringt und es erneut befüllt. Der Grad der Befüllung des Zentrifugentöpfchens 10 ist dabei durch die zugeführte Menge der Flüssigkeit 2 kontrollierbar. Die 30°-Grad-Neigung des Zentrifugentöpfchens 10 ist hierbei besonders zweckmäßig, da durch diese Neigung die Flüssigkeit 2 an einer definierten Stelle in das Zentrifugentöpfchen 10 übertritt, so dass zum Beispiel vermieden werden kann, dass das Zentrifugentöpfchen 10 mit zu viel Flüssigkeit gefüllt wird. Die Flüssigkeit 2 kann für einen Spülprozess nachfolgend wieder aus den Zentrifugentöpfchen 10 abzentrifugiert werden. Der Zyklus aus Befüllen und Zentrifugieren (Spülen) kann mehrfach nacheinander wiederholt werden, wobei je nach Anwendungsfall die abzentrifugierten Flüssigkeiten jeweils ganz oder teilweise in der mikrofluidischen Vorrichtung weiter prozessiert werden oder aber verworfen werden können.

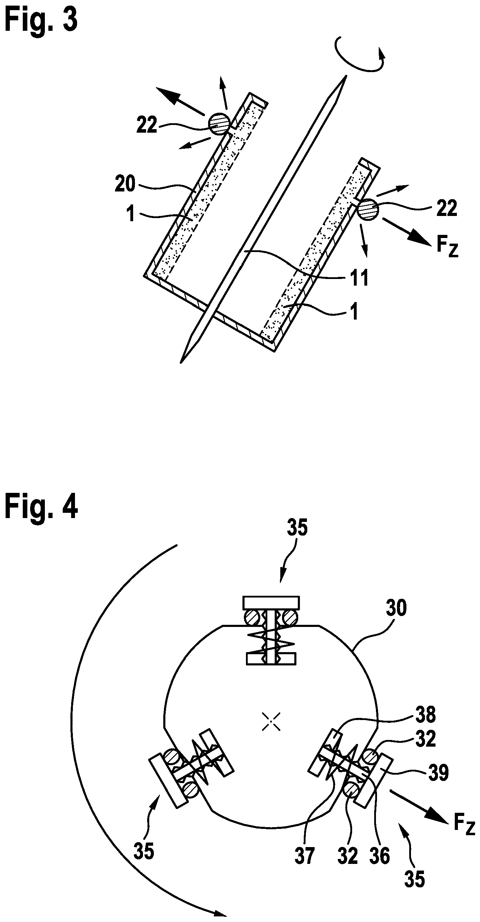

**Fig. 3** zeigt eine weitere, besonders bevorzugte Ausführungsform einer zentripetalkraftabhängigen Ventilfunktion. Hierbei ist ein außenumlaufender Dichtring 22 im oberen Bereich des Zentrifugentöpfchens 20 vorgesehen, der Öffnungen in der Wand des Zentrifugentöpfchens 20 verschließt. Das Zentrifugentöpfchen 20 ist nach oben mit einer nach innen ragenden Krempe 23 ausgestattet, um ein Entweichen der Flüssigkeit 1 aus dem Zentrifugentöpfchen 20 heraus bei geringer Drehzahl zu vermeiden. Diese Ausführungsform mit außenliegendem Dichtring 22 hat den Vorteil, dass die auf den Dichtring 22 wirkenden Zentripetalkräfte F_{Z} diesen von der Dichtfläche wegdehnen beziehungsweise seine Dichtkraft zur Außenfläche des Zentrifugentöpfchens 20 hin reduzieren. Somit kann ein größerer Anteil der Flüssigkeit 1 aus dem Zentrifugentöpfchen 20 abzentrifugiert werden, da im Vergleich mit der Ausführungsform in den Fig. 1 und 2 nicht mehr allein die Flüssigkeitsmasse entscheidend für die Druckverhältnisse an der Dichtung ist. In besonders bevorzugter Weise ist der Dichtring 22 und die Rotationskräfte so aufeinander abgestimmt, dass die Zentripetalkräfte allein ausreichend sind, um das aus Dichtring 22 und Außenwand des Zentrifugentöpfchens 20 gebildete Ventil zu öffnen. Dies hat den besonderen Vorteil, dass die gesamte Flüssigkeitsmenge abzentrifugiert werden kann, ohne dass Restmengen im Zentrifugentöpfchen 20 verbleiben. Hierfür wird zweckmäßigerweise ein relativ weiches Material (z. B. ein weicher Gummiring) für den Dichtring 22 eingesetzt, das sich durch Einwirkung der Zentripetalkraft leicht dehnen lässt. Die Ausführungsform mit einem außenliegenden Dichtring 22 hat gegenüber einem innenliegenden Dichtring gemäß der Ausführungsform in den Fig. 1 und 2 den Vorteil, dass auch bei hohen Drehzahlen und wenig Flüssigkeit im Zentrifugentöpfchen 20 noch ein Flüssigkeitsdurchtritt durch die Dichtfläche zwischen Dichtring 22 und Wand des Zentrifugentöpfchens 20 möglich ist.

**Fig. 4** zeigt ein besonders bevorzugtes Ausführungsbeispiel einer zentripetalkraftabhängigen Ventilfunktion 35 für eine Zentrifugeneinheit. Hier sind in Aufsicht drei Ventileinrichtungen 35 gezeigt, die in die Wand des Zentrifugentöpfchens 30 integriert sind. Die auf dem Umfang des Zentrifugentöpfchens 30 verteilten Ventile 35 werden von einem die Wand des Zentrifugentöpfchens 30 durchtretenden Bolzen 36 gebildet. Die hierfür in dem Zentrifugentöpfchen 30 vorgesehenen Öffnungen sind etwas größer als der Durchmesser des jeweiligen Bolzens 36, damit der Bolzen 36 innerhalb der Öffnung frei beweglich ist. Auf der Innenseite des Zentrifugentöpfchens 30 ist der Bolzen 36 mit einer Druckfeder (Rückstellfeder) 37 und einer Haltemutter 38 oder einer anderen Sicherung versehen. Auf der Außenseite des Ventils 35 befindet sich ein Bolzenkopf 39 an dem Bolzen 36. Zwischen Bolzenkopf 39 und der Wand des Zentrifugentöpfchens 30 ist ein umlaufender Dichtring 32 vorgesehen, der die Öffnung nach außen abdichtet. Mittels der Druckfeder 37, die in Richtung der Haltemutter 38 drückt, wird der Bolzenkopf 39 an den außenseitigen Dichtring 32 gezogen und dieser gegen die Außenwand des Zentrifugentöpfchens 30 gepresst. Dadurch wird die Durchtrittsöffnung dicht verschlossen. Bei einer Rotation des Zentrifugentöpfchens 30 wirkt die Zentripetalkraft F_{Z} gegen die Federkraft der Druckfeder 37. Bei einer bestimmten Drehzahl reicht die Zentripetalkraft Fz aus, um die Öffnungen für den Flüssigkeitsdurchtritt freizugeben, so dass die in dem Zentrifugentöpfchen 30 zentrifugierte Flüssigkeit aus dem Zentrifugentöpfchen 30 austritt und in das hier nicht näher gezeigte mikrofluidische Netzwerk der Vorrichtung übertreten kann.

Die Drehzahlschwelle, die für eine derartige Betätigung der Ventilfunktion 35 zu erreichen ist, wird durch die Masse jedes Bolzens 36 mit der daran befindlichen Gegenmutter 38, sowie durch die Federkraft der Druckfeder 37, die dem entgegenwirkt, bestimmt. Weiterhin spielt die Position der Gegenmutter 38 in Relation zu dem Bolzen 36 eine Rolle. Wenn der Bolzen 36 mit einem Gewinde versehen ist, kann die Gegenmutter 38 in einfacher Weise in ihrer Position verändert werden, wodurch die Vorspannung der Druckfeder 37 und damit deren Rückhaltekraft einstellbar ist. Als Materialien für die einzelnen Komponenten der Ventilkonstruktion 35 sind vor allem biokompatible Materialien geeignet. Beispielsweise können Edelstahl-Imbusschrauben M4 x 12 mit M4-Muttern zusammen mit einem Silikon-O-Ring (z. B. 4 x 2 mm) und Stahlfedern eingesetzt werden. Diese beispielhaften Dimensionen eignen sich für Zentrifugeneinheiten, bei denen das Zentrifugentöpfchen beispielsweise einen Durchmesser von 3 - 4 cm aufweist. Für kleinere Zentrifugeneinheiten, die insbesondere für kommerziell gebräuchliche mikrofluidische Vorrichtungen geeignet sind, und die vorzugsweise einen Durchmesser des Zentrifugentöpfchens von etwa 5 bis 20 mm, insbesondere 5 bis 15 mm, beispielsweise 10 mm, aufweisen, sind die Abmessungen der Komponenten für die Ventilfunktion entsprechend kleiner zu wählen. Alternativ zu Schrauben können Bolzen ohne Gewinde und alternativ zu Muttern beispielsweise Zapfen- oder Sprengringe oder selbsthaltende Klemmringe verwendet werden, die aufgesetzt und/oder aufgepresst werden.

Die Ventilfunktion kann beispielsweise durch die Wahl geeigneter Komponenten und Materialien so ausgestaltet werden, dass bei einer Drehzahl von 10.000 U/min sich die Ventile öffnen und der Flüssigkeitsübertritt stattfinden kann. Als Durchmesser für die Öffnungen innerhalb der Wand des Zentrifugentöpfchens kann beispielsweise 1 mm gewählt werden. Es können beispielsweise drei Öffnungen im Umfang des Zentrifugentöpfchens von jeweils 1 mm eingesetzt werden. Für verschiedene Anwendungen kann es vorteilhaft sein, die Öffnungen für den Flüssigkeitsdurchtritt verhältnismäßig klein zu halten, gegebenenfalls auch kleiner als 1 mm im Durchmesser, um einen Übertritt von Zellen zu vermeiden. Dies kann insbesondere dann sinnvoll sein, wenn mit der Zentrifugeneinheit zellfreies Plasma aus Vollblut gewonnen werden soll. Auch kann durch relativ kleine Öffnungen erreicht werden, dass kein unerwünschtes Abzentrifugieren von Zellen erfolgt, beispielsweise bei solchen Anwendungsfällen, bei denen zunächst Erythrozyten in Vollblut selektiv lysiert, abzentrifugiert und verworfen werden, bevor andere Blutzellen, beispielsweise Leukozyten, die im Zentrifugentöpfchen zurückgehalten wurden, lysiert und beispielsweise deren Nukleinsäuren extrahiert und weiterverarbeitet werden sollen.

Verhältnismäßig kleine Öffnungen haben allerdings den Nachteil, dass auch bei hohen Drehzahlen ein vollständiger Übertritt der Flüssigkeit aus dem Zentrifugentöpfchen nach außen eine gewisse Zeitspanne, beispielsweise 1 -2 Minuten, erfordern kann. Dies kann in solchen Fällen nachteilig sein, in denen während dieser Zeitspanne ein zuvor resuspendiertes Zellmaterial wieder an die Innenwände des Zentrifugentöpfchens zentrifugiert werden würde. Insbesondere für solche Fälle, aber auch allgemein für solche Fälle, in denen aus anderen Gründen ein schneller Flüssigkeitsübertritt erfolgen soll, können relativ große Öffnungen für den Flüssigkeitsübertritt vorteilhaft sein. Es kann beispielsweise vorgesehen sein, dass zusätzlich zu den beschriebenen reversiblen Ventilfunktionen mit verhältnismäßig kleinen Öffnungen zusätzlich relativ große Öffnungen in dem Zentrifugentöpfchen vorgesehen sind, die erst ab einer sehr hohen Drehzahl beziehungsweise erst ab einer sehr großen wirkenden Zentripetalkraft irreversibel aufbrechen und einen sehr schnellen Flüssigkeitsübertritt zulassen.

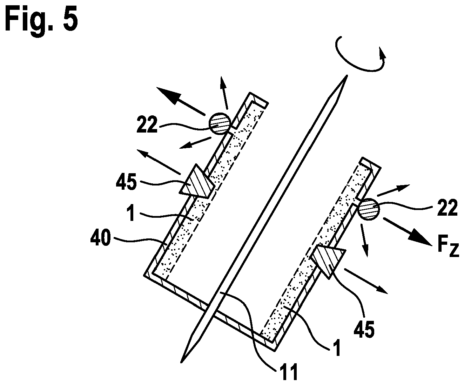

**Fig.** 5 illustriert in schematischer Schnittdarstellung ein Zentrifugentöpfchen 40 mit einer reversiblen Ventilfunktion, die von einem außen umlaufenden Dichtring 22 realisiert wird, der vergleichbar mit der Ausführungsform in Fig. 3 Öffnungen innerhalb der Wand des Zentrifugentöpfchens 40 in zentripetalkraftabhängiger Weise verschließt. Zusätzlich sind in der Wand des Zentrifugentöpfchens 40 weitere, im Durchmesser vorzugsweise größere Öffnungen vorhanden, die in diesem Ausführungsbeispiel von Stöpseln 45 verschlossen werden. Alternativ können diese Öffnungen beispielsweise durch Klebeband verschlossen sein. Die durch Stöpsel 45 oder anderweitige Verschlussmöglichkeiten verschlossenen relativ großen Öffnungen brechen bei einer entsprechend hohen Drehzahl irreversibel auf und entlassen die Flüssigkeit 1 aus den Zentrifugentöpfchen 40 sehr schnell. Beispielsweise für den Anwendungsfall der Gewinnung von gewaschenen Zellen aus dem Zentrifugentöpfchen 40 wird mit dieser Ausführungsform erreicht, dass es während der nur sehr kurzen Zeitspanne der Überführung der abgelösten Zellen aus dem Zentrifugentöpfchen 40 heraus nicht wieder zu einem Anhaften der resuspendierten Zellen an der Innenwand des Zentrifugentöpfchens 40 kommt, wie das bei einem längeren Schleudern der Fall wäre. Das irreversible Aufbrechen der Ventilfunktion 45 zum Beispiel durch Klebeband, das außen auf das Zentrifugentöpfchen 40 im Bereich der Ventifunktion 45 geklebt ist, kann dadurch erreicht werden, dass ab einer gewissen Größe der wirkenden Zentripetalkraft beziehungsweise ab einer bestimmten Drehzahlschwelle die Klebekraft nachgibt und die Öffnungen irreversibel freigegeben werden. Der Verschluss kann beispielsweise auch mittels einer Metallfolie so ausgelegt sein, dass die Metallfolie oberhalb der erwähnten Drehzahlschwelle irreversibel zerreißt. In einer weiteren Ausführungsform können die Öffnungen mit Stöpseln verschlossen werden, beispielsweise Plastik- oder Metallstöpsel, die ab einer gewissen Höhe der Zentripetalkraft beziehungsweise bei einem Überschreiten der Drehzahlschwelle herausfliegen und die Öffnungen schlagartig freigeben. Insbesondere durch eine Kombination von derartigen irreversiblen Ventilfunktionen mit reversiblen Ventilfunktionen eröffnen sich vielfältige Einsatzmöglichkeiten für die in eine mikrofluidische Vorrichtung integrierte Zentrifugeneinheit. Die in Fig. 5 gezeigte Kombination der reversiblen Ventilfunktion aus Fig. 3 und der irreversiblen Ventilfunktion 45 stellt lediglich ein Beispiel dar. In anderen Ausführungsformen kann es beispielsweise vorgesehen sein, die Ventilfunktion 35 aus Fig. 4 mit einer irreversiblen Ventilfunktion zu kombinieren.

Durch gezielte Betätigung der zentripetalkraftabhängigen Ventilfunktionen durch Einstellung der erforderlichen Drehzahlen und gegebenenfalls auch durch die Verwendung selektiver Lyse- und/oder Extraktionsmedien können mithilfe der integrierten Zentrifugeneinheit spezifische Prozesse bei der Prozessierung der Probe durchgeführt werden, beispielsweise eine selektive Lyse bestimmter Zellen und/oder beispielsweise eine Extraktion von Nukleinsäuren oder Ähnliches.

Eine mikrofluidische Vorrichtung mit Integration einer derartigen Zentrifugeneinheit kann beispielsweise für die Abtrennung von zellulärem Material aus Vollblut und einer Gewinnung des resultierenden zellfreien Blutplasmas genutzt werden. Aus dem zellfreien Blutplasma können dann beispielsweise darin enthaltene zirkulierende zellfreie Tumor-DNA oder andere Nukleinsäuren isoliert und analysiert werden. Für die Durchführung dieser Prozessierung wird zunächst eine (Voll-)Blutprobe durch einen Probeneinlass direkt in das Zentrifugentöpfchen eingegeben, beispielsweise mittels einer Pipette. Zunächst wird bei mittlerer Zentrifugendrehzahl das zelluläre Material (Leukozyten, Erythrozyten, zirkulierende Tumorzellen etc.) über eine hinreichend kleine Zeitspanne an die innere Wand des Zentrifugentöpfchens zentrifugiert. Hierbei können Rauigkeiten oder Nanostrukturen oder gezielt angebrachte Vertiefungen in der Innenwand des Zentrifugentöpfchens eine Adhäsion der Zellen an der Wand weiter unterstützen. Anschließend wird die Zentrifugendrehzahl über einen vorgebbaren Schwellwert hochgesetzt, wodurch die Ventilfunktion in der beschriebenen Weise ausgelöst wird und das zellfreie Blutplasma aus dem Zentrifugentöpfchen geschleudert wird und in das fluidische Netzwerk der mikrofluidischen Vorrichtung eingekoppelt werden kann.

Ein anderes Anwendungsbeispiel für eine derartige mikrofluidische Vorrichtung ist eine Abtrennung von Erythrozyten und eine Aufreinigung und Lyse der verbleibenden Zellen sowie eine Extraktion der hieraus gewonnenen Nukleinsäuren. Bei diesem Ausführungsbeispiel wird nach einem Einbringen beispielsweise der Vollblutprobe in das Zentrifugentöpfchen ein für eine Erythrozytenlyse selektives Medium (zum Beispiel eine Ammoniumchloridlösung) in der erforderlichen Menge in das Zentrifugentöpfchens hinzugegeben. Dieses Erythrozytenlysemedium bringt die roten Blutkörperchen zum Platzen. Nach einer hinreichend langen Wartezeit wird der Zentrifugationsprozess mit einer mittleren Drehzahl gestartet, wobei die Ventilfunktion noch geschlossen bleibt. Leukozyten und gegebenenfalls zirkulierende Tumorzellen (CTCs) werden an die Wand des Zentrifugentöpfchens sedimentiert, wobei Oberflächenstrukturen an der Innenwand des Zentrifugentöpfchens die Adhäsion in der Wand verstärken können. Nach einer ausreichend langen Zentrifugationsdauer wird die Drehzahl so erhöht, dass die Ventilfunktion öffnet und die "überstehende" Flüssigkeit einschließlich des Erythrozytenlysats aus den Zentrifugentöpfchen ausgeschleudert und verworfen wird. Anschließend kann die Probeneingabekammer und/oder das Zentrifugentöpfchen ein- oder mehrfach gespült und zum Beispiel von Erythrozytenresten befreit werden. Während des Spülens bleiben die Zellen, insbesondere die Leukozyten, an der inneren Wandoberfläche des Zentrifugentöpfchens haften, so dass durch die Spülschritte das zelluläre Material an der Wand des Zentrifugentöpfchens gereinigt und Verunreinigungen entfernt werden. Schließlich wird ein Lysepuffer zur Lysierung des Zellmaterials an der Wand des Zentrifugentöpfchens zugegeben und die Nukleinsäuren dadurch freigesetzt. Im abschließenden Zentrifugationsschritt bei hoher Drehzahl wird das Lysemedium mit den enthaltenen Nukleinsäuren aus den Zentrifugentöpfchen heraus in die Probeeingabenkammer überführt und in das fluidische Netzwerk der mikrofluidischen Vorrichtung übernommen. Die verwendeten Medien können je nach Bedarf temperiert, insbesondere geheizt oder gekühlt werden, wobei beispielsweise durch ein erhitztes Lysemedium die Lyse der Zellen gefördert werden kann.

Bei einem weiteren Anwendungsbeispiel können Erythrozyten aus einer Vollblutprobe abgetrennt werden und die verbleibenden Zellen in das fluidische Netzwerk der mikrofluidischen Vorrichtung eingekoppelt und dort weiter verwendet werden. Nach dem Eingeben beispielsweise einer Vollblutprobe in das Zentrifugentöpfchen wird zum Start der Aufreinigung zunächst ein für eine Erythrozytenlyse selektives Lysemedium, z.B. Ammoniumchloridlösung, in der gewünschten Menge in das Zentrifugentöpfchen z.B. durch Überspülen hinzudosiert. Nach der daraufhin erfolgenden Lyse der Erythrozyten wird der Zentrifugationsprozess mit einer mittleren Drehzahl gestartet, wobei Leukozyten und gegebenenfalls zirkulierende Tumorzellen an die Zentrifugentöpfchenwand sedimentiert werden, gegebenenfalls unterstützt durch Strukturierungen an der inneren Wandoberfläche des Zentrifugentöpfchens. Nach einer ausreichend langen Zentrifugationsdauer wird die Drehzahl so erhöht, dass die Ventilfunktion öffnet und die "überstehende" Flüssigkeit aus dem Zentrifugentöpfchen ausgeschleudert und verworfen wird. Anschließend werden die Probeneingabekammer und/oder das Zentrifugentöpfchen ein- oder mehrfach gespült und insbesondere von Erythrozytenresten befreit. Die von den Erythrozyten befreiten, verbleibenden zellulären Bestandteile der Probe befinden sich dabei im Inneren des Zentrifugentöpfchens und können durch die optionalen Spülschritte gewaschen werden. Schließlich wird ein weiteres Medium in der gewünschten Menge in das Zentrifugentöpfchen eingebracht, um die sich an der Wand des Zentrifugentöpfchens befindlichen Zellen abzulösen. Hierfür kann beispielsweise ein EDTA-haltiges Medium verwendet werden. Die Ablösung der Zellen von der Wand kann durch Stehenlassen erfolgen oder kann beispielsweise durch langsames Rotieren des Zentrifugentöpfchens mit periodischem Wechsel der Drehrichtung unterstützt werden. Die Drehgeschwindigkeit wird dabei zweckmäßigerweise so niedrig gewählt, dass Zentripetalkräfte keine Rolle im Sinne einer Zellsedimentation spielen, aber dennoch die Flüssigkeitssäule die gesamte Zentrifugentöpfcheninnenwand bedeckt hält, wobei gleichzeitig eine transiente Strömung im Zentrifugentöpfchen entsteht. Vorzugsweise erleichtern die durch einen Wechsel der Drehrichtung ausgelösten Verwirbelungen das Ablösen der Zellen von der inneren Wand des Zentrifugentöpfchens und erleichtern damit den Übergang der Zellen in die Flüssigkeit. In einem letzten Zentrifugationsschritt bei vorzugsweise abrupt einsetzender hoher Drehzahl werden die abgelösten Zellen innerhalb des Mediums durch die geöffneten Ventile in die Probeneingabekammer ausgeschleudert und in das Kanalystem der mikrofluidischen Vorrichtung überführt. Hierbei kann es vorgesehen sein, dass durch entsprechende Schaltung der Kanäle der mikrofluidischen Vorrichtung zunächst eine Sammlung des Probenmaterials erfolgt, bevor das Material in das eigentliche Kanalsystem eintritt. Auch bei diesem Applikationsbeispiel kann die Temperatur der eingesetzten Medien durch Vorwärmen oder Vorkühlen eingestellt werden, um die Prozesse zu unterstützen.

Die hier anhand von Vollblutproben erläuterten Anwendungsbeispiele der integrierten Zentrifugeneinheit sind auch auf andere Probenflüssigkeiten übertragbar, wobei die in eine mikrofluidische Vorrichtung integrierte Zentrifugeneinheit im Prinzip für alle mikrofluidischen Prozesse genutzt werden kann, die sinnvollerweise einen Zetrifugationsschritt umfassen.

## Patentansprüche

1. Mikrofluidische Vorrichtung (100) zur Prozessierung von flüssigen Proben (10), in die wenigstens eine Zentrifugeneinheit mit einem Zentrifugentöpfchen (10; 20; 30; 40) und wenigstens einer zentripetalkraftabhängige Ventilfunktion (12; 22; 35; 45) integriert ist, **dadurch gekennzeichnet, dass** das Zentrifugentöpfchen zwischen zwei Schichten der Vorrichtung (100) drehbar gelagert ist.

2. Mikrofluidische Vorrichtung (100) nach Anspruch 1, **dadurch gekennzeichnet, dass** die zentripetalkraftabhängige Ventilfunktion eine reversible Ventilfunktion (12; 22; 35) ist.

3. Mikrofluidische Vorrichtung (100) nach Anspruch 1 oder Anspruch 2, **dadurch gekennzeichnet, dass** die zentripetalkraftabhängigen Ventilfunktion durch wenigstens einen Dichtring (12; 22; 32) realisiert ist.

4. Mikrofluidische Vorrichtung (100) nach Anspruch 3, **dadurch gekennzeichnet, dass** der Dichtring (22; 32) das Zentrifugentöpfchen (20; 30) außen umgibt und dabei Öffnungen im Zentrifugentöpfchen in Abhängigkeit von einer wirkenden Zentripetalkraft reversibel verschließt oder freigibt.

5. Mikrofluidische Vorrichtung (100) nach einem der vorhergehenden Ansprüche, **dadurch gekennzeichnet, dass** die Ventilfunktion (35) durch wenigstens eine Öffnung in der Wand des Zentrifugentöpfchens (30) gebildet wird, in der ein die Wand durchtretender Bolzen (36) beweglich angeordnet ist, wobei der Bolzen (36) außerhalb des Zentrifugentöpfchens (30) einen Bolzenkopf (39) und unterhalb des Bolzenkopfes einen Dichtring (32) aufweist, wobei der Bolzen (36) innerhalb des Zentrifugentöpfchens (30) durch eine gesicherten Druckfeder (37) unterhalb einer vorgebbaren Zentripetalkraft in einer dichtenden Stellung gehalten ist.

6. Mikrofluidische Vorrichtung (100) nach Anspruch 5, **dadurch gekennzeichnet, dass** die Sicherung der Druckfeder (37) durch eine Gegenmutter (38) realisiert ist, die auf einem Gewinde des Bolzens (36) im Inneren des Zentrifugentöpfchens (30) aufgesetzt ist.

7. Mikrofluidische Vorrichtung (100) nach einem der vorhergehenden Ansprüche, **dadurch gekennzeichnet, dass** die Ventilfunktion eine irreversible Ventilfunktion (45) ist.

8. Mikrofluidische Vorrichtung (100) nach Anspruch 7, **dadurch gekennzeichnet, dass** die irreversible Ventilfunktion (45) bei höherer Zentripetalkraft als eine zusätzlich vorgesehene reversible Ventilfunktion (12; 22; 35) betätigbar ist.

9. Mikrofluidische Vorrichtung (100) nach einem der vorherigen Ansprüche, **dadurch gekennzeichnet, dass** das Zentrifugentöpfchen (10; 20; 30; 40) zumindest teilweise mit Oberflächenstrukturen zur Anhaftung von Probenbestandteilen ausgestattet ist.

10. Mikrofluidische Vorrichtung (100) nach einem der vorherigen Ansprüche, **dadurch gekennzeichnet, dass** das Zentrifugentöpfchen (10; 20; 30; 40) in einem Kippwinkel zwischen 10 und 50°, vorzugsweise 30°, während der Prozessierung angeordnet ist.

11. Mikrofluidische Vorrichtung (100) nach einem der vorherigen Ansprüche, **dadurch gekennzeichnet, dass** die Integrationsposition innerhalb der mikrofluidischen Vorrichtung (100) für die Zentrifugeneinheit einen fluidischen Zugang (106) aufweist, über den Flüssigkeiten ohne das Zentrifugentöpfchen (10; 20; 30; 40) zu durchlaufen, in die Vorrichtung (100) eingebracht werden können.

12. Verfahren zum Betreiben mikrofluidischen Vorrichtung (100) nach einem der vorherigen Ansprüche, **dadurch gekennzeichnet, dass** nach einem Einbringen der Probe (1) in das Zentrifugentöpfchen (10; 20; 30; 40) in einer ersten Phase das Zentrifugentöpfchen mit einer ersten Drehzahl rotiert wird und in einer anschließenden zweiten Phase das Zentrifugentöpfchen mit einer zweiten, erhöhten Drehzahl rotiert wird, wobei durch die erhöhte Drehzahl wenigstens eine zentripetalkraftabhängige Ventilfunktion (12; 22; 35; 45) der Zentrifugeneinheit betätigt wird.

13. Verfahren nach Anspruch 12, **dadurch gekennzeichnet, dass** das Zentrifugentöpfchen (10; 20; 30; 40) wiederholt durch Überspülen mit einer Flüssigkeit erneut befüllbar ist.

14. Verwendung einer Vorrichtung (100) nach einem der Ansprüche 1 bis 11, **dadurch gekennzeichnet, dass** die Vorrichtung zur Abtrennung von zellulären Bestandteilen einer Probe und/oder zur Lyse von zellulären Bestandteilen und/oder zur selektiven Isolierung bestimmter zellulärer Bestandteile einer Probe eingesetzt wird.

## Claims

1. Microfluidic device (100) for the processing of liquid samples (10), there being integrated therein at least one centrifuge unit having a centrifuge cup (10; 20; 30; 40) and at least one centripetal force-dependent valve function (12; 22; 35; 45), **characterized in that** the centrifuge cup is mounted rotatably between two layers of the device (100).

2. Microfluidic device (100) according to Claim 1, **characterized in that** the centripetal force-dependent valve function is a reversible valve function (12; 22; 35).

3. Microfluidic device (100) according to Claim 1 or Claim 2, **characterized in that** the centripetal force-dependent valve function is realized by at least one sealing ring (12; 22; 32).

4. Microfluidic device (100) according to Claim 3, **characterized in that** the sealing ring (22; 32) externally surrounds the centrifuge cup (20; 30) and at the same time exposes or closes openings in the centrifuge cup reversibly as a function of an acting centripetal force.

5. Microfluidic device (100) according to any of the preceding claims, **characterized in that** the valve function (35) is formed by at least one opening in the wall of the centrifuge cup (30), in which a bolt (36) passing through the wall is movably arranged, where the bolt (36) has a bolt head (39) outside the centrifuge cup (30) and a sealing ring (32) below the bolt head, where the bolt (36) within the centrifuge cup (30) is held in a sealing position by a secured compression spring (37) below a predeterminable centripetal force.

6. Microfluidic device (100) according to Claim 5, **characterized in that** the compression spring (37) is secured by a locknut (38) which is mounted on a thread of the bolt (36) in the interior of the centrifuge cup (30).

7. Microfluidic device (100) according to any of the preceding claims, **characterized in that** the valve function is an irreversible valve function (45).

8. Microfluidic device (100) according to Claim 7, **characterized in that** the irreversible valve function (45) can be actuated at a higher centripetal force than an additionally provided reversible valve function (12; 22; 35).

9. Microfluidic device (100) according to any of the preceding claims, **characterized in that** the centrifuge cup (10; 20; 30; 40) is equipped at least partly with surface structures for the adherence of sample constituents.

10. Microfluidic device (100) according to any of the preceding claims, **characterized in that** the centrifuge cup (10; 20; 30; 40) is arranged at a tilt angle between 10 and 50°, preferably 30°, during the processing.

11. Microfluidic device (100) according to any of the preceding claims, **characterized in that** the integration position within the microfluidic device (100) for the centrifuge unit has a fluidic entry (106) via which liquids can be introduced into the device (100) without passing through the centrifuge cup (10; 20; 30; 40).

12. Method for operating a microfluidic device (100) according to any of the preceding claims, **characterized in that** after introduction of the sample (1) into the centrifuge cup (10; 20; 30; 40), the centrifuge cup is rotated at a first speed in a first phase and the centrifuge cup is rotated at a second, increased speed in a subsequent second phase, where the increased speed causes actuation of at least one centripetal force-dependent valve function (12; 22; 35; 45) of the centrifuge unit.

13. Method according to Claim 12, **characterized in that** the centrifuge cup (10; 20; 30; 40) is refillable repeatedly by flooding with a liquid.

14. Use of a device (100) according to any of Claims 1 to 11, **characterized in that** the device is employed for removing cellular constituents of a sample and/or for lysing cellular constituents and/or for selectively isolating particular cellular constituents of a sample.

## Revendications

1. Dispositif microfluidique (100) pour le traitement d'échantillons liquides (10), dans lequel est intégrée au moins une unité de centrifugation avec un pot de centrifugation (10 ; 20 ; 30 ; 40) et au moins une fonction de soupape dépendante de la force centripète (12 ; 22 ; 35 ; 45), **caractérisé en ce que** le pot de centrifugation est logé de manière rotative entre deux couches du dispositif (100).

2. Dispositif microfluidique (100) selon la revendication 1, **caractérisé en ce que** la fonction de soupape dépendante de la force centripète est une fonction de soupape réversible (12 ; 22 ; 35).

3. Dispositif microfluidique (100) selon la revendication 1 ou la revendication 2, **caractérisé en ce que** la fonction de soupape dépendante de la force centripète est réalisée par au moins une bague d'étanchéité (12 ; 22 ; 32).

4. Dispositif microfluidique (100) selon la revendication 3, **caractérisé en ce que** la bague d'étanchéité (22 ; 32) entoure extérieurement le pot de centrifugation (20 ; 30) et obture ou libère de manière réversible des ouvertures dans le pot de centrifugation en fonction d'une force centripète agissant.

5. Dispositif microfluidique (100) selon l'une quelconque des revendications précédentes, **caractérisé en ce que** la fonction de soupape (35) est formée par au moins une ouverture dans la paroi du pot de centrifugation (30), dans laquelle un boulon (36) traversant la paroi est agencé de manière mobile, le boulon (36) présentant une tête de boulon (39) à l'extérieur du pot de centrifugation (30) et une bague d'étanchéité (32) en dessous de la tête de boulon, le boulon (36) étant maintenu dans une position d'étanchéité à l'intérieur du pot de centrifugation (30) par un ressort de compression (37) sécurisé en dessous d'une force centripète prédéfinissable.

6. Dispositif microfluidique (100) selon la revendication 5, **caractérisé en ce que** la sécurisation du ressort de compression (37) est réalisée par un contreécrou (38) rapporté sur un filetage du boulon (36) à l'intérieur du pot de centrifugation (30).

7. Dispositif microfluidique (100) selon l'une quelconque des revendications précédentes, **caractérisé en ce que** la fonction de soupape est une fonction de soupape irréversible (45).

8. Dispositif microfluidique (100) selon la revendication 7, **caractérisé en ce que** la fonction de soupape irréversible (45) peut être actionnée avec une force centripète plus élevée qu'une fonction de soupape réversible (12 ; 22 ; 35) prévue en supplément.

9. Dispositif microfluidique (100) selon l'une quelconque des revendications précédentes, **caractérisé en ce que** le pot de centrifugation (10 ; 20 ; 30 ; 40) est au moins partiellement équipé de structures de surface pour l'adhérence de constituants de l'échantillon.

10. Dispositif microfluidique (100) selon l'une quelconque des revendications précédentes, **caractérisé en ce que** le pot de centrifugation (10 ; 20 ; 30 ; 40) est agencé selon un angle de basculement compris entre 10 et 50°, de préférence 30°, pendant le traitement.

11. Dispositif microfluidique (100) selon l'une quelconque des revendications précédentes, **caractérisé en ce que** la position d'intégration à l'intérieur du dispositif microfluidique (100) pour l'unité de centrifugation présente un accès fluidique (106) par l'intermédiaire duquel des liquides peuvent être introduits dans le dispositif (100) sans passer par le pot de centrifugation (10 ; 20 ; 30 ; 40).

12. Procédé d'exploitation d'un dispositif microfluidique (100) selon l'une quelconque des revendications précédentes, **caractérisé en ce qu'**après une introduction de l'échantillon (1) dans le pot de centrifugation (10 ; 20 ; 30 ; 40), dans une première phase, le pot de centrifugation est mis en rotation à une première vitesse de rotation et, dans une deuxième phase suivante, le pot de centrifugation est mis en rotation à une deuxième vitesse de rotation plus élevée, au moins une fonction de soupape (12 ; 22 ; 35 ; 45) de l'unité de centrifugation dépendante de la force centripète étant actionnée par la vitesse de rotation plus élevée.

13. Procédé selon la revendication 12, **caractérisé en ce que** le pot de centrifugation (10 ; 20 ; 30 ; 40) peut être rempli à nouveau de manière répétée par rinçage avec un liquide.

14. Utilisation d'un dispositif (100) selon l'une quelconque des revendications 1 à 11, **caractérisée en ce que** le dispositif est utilisé pour séparer des constituants cellulaires d'un échantillon et/ou pour lyser des constituants cellulaires et/ou pour isoler sélectivement des constituants cellulaires déterminés d'un échantillon.
